Europäisches Patentamt

European Patent Office

Office européen des brevets

(19)

(11) Veröffentlichungsnummer: **0 065 670
B1**

(12)

# EUROPÄISCHE PATENTSCHRIFT

(45) Veröffentlichungstag der Patentschrift:
14.08.85

(21) Anmeldenummer: **82103766.0**

(22) Anmeldetag: **03.05.82**

(51) Int. Cl.⁴: **F 16 M  5/00, F 16 M  1/08**

(54) **Verpackungsmaschine mit einem Gestell in Schweisskonstruktion.**

(30) Priorität: **07.05.81 DE 3118078**

(43) Veröffentlichungstag der Anmeldung:
**01.12.82 Patentblatt 82/48**

(45) Bekanntmachung des Hinweises auf die Patenterteilung:
**14.08.85 Patentblatt 85/33**

(84) Benannte Vertragsstaaten:
**CH DE FR GB IT LI**

(56) Entgegenhaltungen:
**DE - C - 849 499**

(73) Patentinhaber: **ROBERT BOSCH GMBH, Postfach 50,
D-7000 Stuttgart 1 (DE)**

(72) Erfinder: **Emmerling, Hans-Jörg, Ahlendung 32,
D-5067 Kürten 4 (DE)**
Erfinder: **Hamm, Josef, Hornstrasse 15, D-5060 Bergisch
Gladbach (DE)**

ACTORUM AG

**Beschreibung**

*Stand der Technik*

Die Erfindung geht aus von einer Verpackungsmaschine nach der Gattung des Hauptanspruchs. Die Gestelle der Verpackungsmaschinen sind grösstenteils Gusskonstruktionen, deren Bezugs- und Auflageflächen spanabhebend bearbeitet sind. Diese Bearbeitung setzt grosse Werkzeugmaschinen voraus und ist sehr aufwendig. Daneben sind auch schon aus Stahlplatten und Schienen zusammengeschweisste Gestelle bekannt, bei denen es jedoch an Starrheit und universeller Brauchbarkeit fehlt.

*Vorteile der Erfindung*

Die erfindungsgemässe Verpackungsmaschine mit den kennzeichnenden Merkmalen des Hauptanspruchs hat demgegenüber den Vorteil, dass bei hoher Starrheit des Maschinengestells dieses mit einfachen Mitteln mit hoher Masshaltigkeit hergestellt werden kann. Die Verwendung der eine hohe Steifigkeit verleihenden Rohre als Traversen hat ferner den Vorteil, dass diese, wenn ihre Enden abgedichtet sind, als Vorratsbehälter für Druckluft oder Unterdruck verwendbar sind.

*Zeichnung*

Ein Ausführungsbeispiel der Erfindung ist in der Zeichnung dargestellt und in der nachfolgenden Beschreibung näher erläutert. Es zeigen:

Fig. 1 ein Maschinengestell in Vorderansicht und
Fig. 2 das Maschinengestell nach Fig. 1 im Querschnitt.

*Beschreibung der Erfindung*

Das Gestell für die Aufbauten einer Verpackungsmaschine, beispielsweise einer Flachbeutelform-, -Füll- und -Schliessmaschine hat eine langgestreckte tischartige Form. Es hat zwei aufrechte, rechteckige Endwände 11, 12 aus Metallguss, die auch als Füsse dienen, zwei auf diesen aufliegende waagerechte Tragbalken 13, 14 und im unteren Teil zwei waagerechte Traversen 15, 16. Die Tragbalken 13, 14 sind handelsübliche Flachschienen aus Stahl, die an den oberen Eckbereichen der Endwände angeschraubt sind. Sie dienen zum Tragen von einzelnen Bearbeitungsvorrichtungen der Verpackungsmaschine.

Die Traversen 15, 16 die aus handelsüblichen Stahlrohren bestehen, verbinden in der unteren Hälfte des Gestells die Endwände 11, 12 und liegen in etwa deckungsgleich unter den Tragbalken 13, 14, sind jedoch etwas zur Mitte der Endwände 11, 12 gedrückt. Sie durchdringen die Endwände 11, 12, in die an den Durchdringungsstellen je eine Hülse 17 aus Stahl eingegossen ist, und sind mit diesen Hülsen 17 verschweisst. Auf die Enden der hohen Traversen 15, 16 sind Deckel 18 aufgeschweisst, so dass die Rohre als Vorratsbehälter für Druckluft oder Unterdruck verwendbar sind. In Durchbrüchen der Rohre oder Deckel 18 können an verschiedenen Stellen Anschlussstutzen 19 eingeschraubt sein, die mit einer Druckluftquelle 20, einer Saugluftquelle 21 und mit Verbrauchern Verbindungen herstellen.

Zwischen den beiden Endwänden 11, 12 sind in gleichen Abständen mehrere, beispielsweise drei aufrechte Zwischenwände 25, 26, 27 angeordnet, deren Höhe jedoch geringer ist als die der Endwände 11, 12. Die Zwischenwände 25-27 sind aus dickem Stahlblech geschnitten und werden paketweise bearbeitet, wie beispielsweise Planfräsen der Auflageflächen für die Tragbalken 13, 14, Bohren der Durchbrüche 28 für die Traversen 15, 16 und anderer Durchbrüche 29 für Wellen und Leitungen, so dass hohe Masshaltigkeit des Gestells gegeben ist. Die Zwischenwände 25-27 sind mit den Tragbalken 13, 14 und den Traversen 15, 16 verschweisst. Koaxial zu den Durchbrüchen 29 sind an den Zwischenwänden 25-27 Lageraugen 30 für eine Steuerwelle 31 angeschraubt.

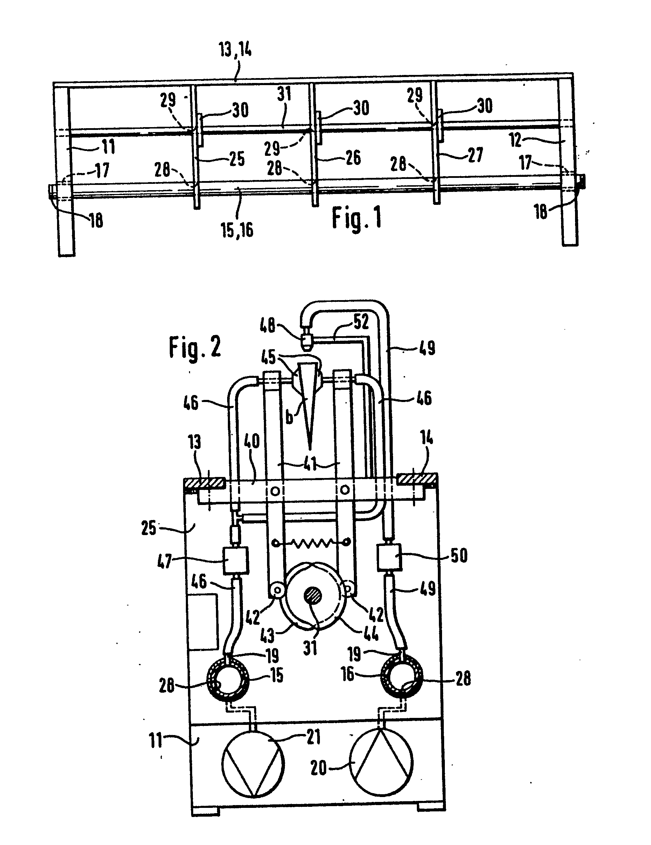

Die Bearbeitungsvorrichtungen, von denen beispielhaft eine Vorrichtung zum Öffnen von Beuteln b in Fig. 2 dargestellt ist, sind jeweils auf einer Platte 40 aufgebaut, die auf der Unterseite der Querbalken 13, 14 anliegt und an diese angeschraubt ist. Durch einen Durchbruch der Platte 40 ragen zwei Hebel 41, 42, welche schwenkbar in der Platte 40 gelagert sind, mit Rollen 42 an Kurvenscheiben 43, 44 auf der Steuerwelle 31 anliegen und Sauger 45 tragen. Über Schlauchleitungen 46 und ein Steuerventil 47 sind die Sauger 45 mit einem Anschlussstutzen an der Traverse 15 verbunden, die mit der Saugluftquelle 21 verbunden ist. Von oben her ragt gegen die Beutelöffnung eine Düse 48, die über eine Schlauchleitung 49 und ein Steuerventil 50 mit einem Anschlussstutzen 19 an der anderen Traverse 16 verbunden ist, welche an die Druckluftquelle 20 angeschlossen ist. Eine auf der Platte 40 befestigte Stütze 52 trägt die Düse 48.

**Patentansprüche**

1. Verpackungsmaschine mit einem langgestreckten, tischartigen Gestell, dass zwei starre Endwände (11, 12), zwei auf diesen aufliegende Tragbalken (13, 14) und Traversen (15,16) im unteren Bereich hat, und bei dem die Verbindungen der einzelnen Teile geschweisst sind, dadurch gekennzeichnet, dass zwischen den Endwänden (11, 12) mehrere plattenförmige Zwischenwände (25-27) gleicher Form angeordnet sind, und dass die Traversen (15, 16) aus Rohren bestehen, welche durch fluchtende Durchbrüche in den Zwischenwänden und Endwänden ragen und mit diesen verschweisst sind.

2. Verpackungsmaschine nach Anspruch 1, dadurch gekennzeichnet, dass die Enden der Rohre (15, 16) dicht verschlossen sind, und die Rohre Anschlüsse für Druckluft oder Unterdruck aufweisen.

**Claims**

1. Packaging machine having an elongate, table-like frame which posses two rigid end walls (11, 12), two supporting beams (13, 14) resting on these, and cross-members (15, 16) in the lower region, the connections between individual components being welded, characterised in that between the end walls (11, 12) there are provided a plurality of plate-shaped partitions (25-27) of identical shape and that the cross-members (15, 16) consist of pipes which protrude through aligned holes in the partitions and end walls and are welded to these.

2. Packaging machine according to Claim 1, characterised in that the end of the pipes (15, 16) are tightly closed and that the pipes possess connections for compressed air or suction.

## Revendications

1. Machine à emballer possédant un bâti allongé semblable à une table, qui comprend deux parois extrêmes (11, 12) rigides, deux poutres (13, 14) disposées sur ces parois et des traverses (15, 16) dans la partie inférieure, et sur lequel les liaisons entre les différentes pièces sont soudées, caractérisée en ce que plusieurs cloisons semblables à des plaques (25-27) de même forme sont disposées entre les parois extrêmes (11, 12) et que les traverses (15, 16) sont constituées te tubes qui traversent des ouvertures alignées ménagées dans le cloison et les parois extrêmes et sont soudés à celles-ci.

2. Machine à emballer selon la revendication 1, caractérisée en ce que les bouts des tubes (15, 16) sont fermés étanches et les tubes présentent des raccords pour de l'air comprimé ou pour une dépression.

Fig. 1

Fig. 2